(19) **Europäisches Patentamt / European Patent Office / Office européen des brevets**

(11) **EP 4 376 251 A1**

(12) **EUROPEAN PATENT APPLICATION**
published in accordance with Art. 153(4) EPC

(43) Date of publication:
**29.05.2024 Bulletin 2024/22**

(21) Application number: **22845779.2**

(22) Date of filing: **05.07.2022**

(51) International Patent Classification (IPC):
**H02J 7/00** (2006.01)     **G06F 1/28** (2006.01)
**H02J 7/10** (2006.01)

(52) Cooperative Patent Classification (CPC):
**G06F 1/28; H02J 7/00; H02J 7/06**

(86) International application number:
**PCT/JP2022/026752**

(87) International publication number:
**WO 2023/002845 (26.01.2023 Gazette 2023/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.07.2021 JP 2021120373**

(71) Applicant: **Panasonic Intellectual Property
Management Co., Ltd.
Kadoma-shi, Osaka 571-0057 (JP)**

(72) Inventors:
• **MASUDA, Yoshiharu
  Kadoma-shi Osaka 571-0057 (JP)**
• **NISHIZUMI, Yuri
  Kadoma-shi Osaka 571-0057 (JP)**
• **MATSUMOTO, Kazuyuki
  Kadoma-shi Osaka 571-0057 (JP)**

(74) Representative: **Grünecker Patent- und
Rechtsanwälte
PartG mbB
Leopoldstraße 4
80802 München (DE)**

(54) **ELECTRONIC DEVICE AND CONTROL METHOD THEREFOR**

(57)     An electronic device includes a battery pack, a charging circuit that charges the battery pack, a load device that operates with a power of the battery pack, a voltage sensor that detects a charge voltage and a discharge voltage of the battery pack, a current sensor that detects a charge current and a discharge current of the battery pack, and a control circuit. The control circuit calculates an internal resistance of the battery pack based on the charge voltage and the charge current, calculates an allowable power indicating a maximum power that is able to be acquired from the battery pack by the load device based on the discharge voltage, the discharge current, and the internal resistance, and sends a control signal to the load device to cause the load device to operate with a power less than or equal to the allowable power.

FIG. 1

**Description**

TECHNICAL FIELD

The present disclosure relates to an electronic device and a method for controlling an electronic device.

BACKGROUND ART

An electronic device such as a portable personal computer operates with a power supplied by an attached or connected storage battery. Such an electronic device is required to control power consumption to operate within a range of power that can be supplied by the storage battery.
PTL 1 discloses a technique for controlling a peak power in an electronic device including a plurality of processors operating as master devices and a plurality of devices operating as slave devices. The electronic device of PTL 1 allows the processor to use the device when total power consumption of the device is less than or equal to a predetermined value calculated from a remaining battery amount in the case of operating with a power supplied by a battery device.

Citation List

Patent Literature

PTL 1: Unexamined Japanese Patent Publication No. 2006-195945

SUMMARY OF THE INVENTION

The storage battery deteriorates by continuing to be used, and thus, a power and a power amount that can be supplied are reduced. Accordingly, in a case where a remaining energy amount of the storage battery is calculated based only on a design value of the storage battery, when the storage battery deteriorates, the power that can be supplied by the storage battery cannot be accurately calculated.
The present disclosure provides an electronic device and a method for controlling an electronic device capable of controlling power consumption with higher accuracy than in the related art.
An electronic device according to one aspect of the present disclosure includes a storage battery, a charging circuit that charges the storage battery, a load device that operates with a power of the storage battery, a voltage sensor that detects a charge voltage and a discharge voltage of the storage battery, a current sensor that detects a charge current and a discharge current of the storage battery, and a control circuit. The control circuit calculates an internal resistance of the storage battery based on the charge voltage and the charge current, calculates an allowable power indicating a maximum power that is able to be acquired from the storage battery by the load device based on the discharge voltage, the discharge current, and the internal resistance, and sends a control signal to the load device to cause the load device to operate with a power less than or equal to the allowable power.
According to the electronic device according to one aspect of the present disclosure, power consumption can be controlled with higher accuracy than in the related art.

BRIEF DESCRIPTION OF THE DRAWINGS

Fig. 1 is a block diagram illustrating a configuration of electronic device 1 according to an exemplary embodiment.
Fig. 2 is a block diagram illustrating a configuration of charging circuit 11 of Fig. 1.
Fig. 3 is a flowchart illustrating charging control processing executed by control circuit 14 of Fig. 1.
Fig. 4 is a graph for describing calculation of internal resistances Ra(1) to Ra(6) by repeatedly executing steps S1 to S11 of Fig. 3.
Fig. 5 is a graph for describing calculation of internal resistances Ra(i) by executing steps S3 to S8 of Fig. 3.
Fig. 6 is a table representing a correction coefficient related to temperature Temp of battery cell 12a used in step S8 of Fig. 3.
Fig. 7 is a flowchart illustrating discharging control processing executed by control circuit 14 of Fig. 1.
Fig. 8 is a table used to calculate charging rate range Cd in step S24 of Fig. 7.
Fig. 9 is a table used to determine maximum power W1 that can be output from battery pack 12 in step S25 of Fig. 7.
Fig. 10 is a flowchart illustrating interruption processing executed by control circuit 14 of Fig. 1.

DESCRIPTION OF EMBODIMENT

Hereinafter, exemplary embodiments will be described in detail with appropriate reference to the drawings. However, unnecessarily detailed description may be omitted. For example, the detailed description of already well-known matters and the overlap description of substantially the same configurations may be omitted. This is to avoid an unnecessarily redundant description below and to facilitate understanding by those skilled in the art.

Note that the present inventor(s) provide the accompanying drawings and the following description for those skilled in the art to fully understand the present disclosure, but do not intend that the subject matter described in the claims is limited to these drawings and description.

[Exemplary embodiment]

(Configuration of exemplary embodiment)

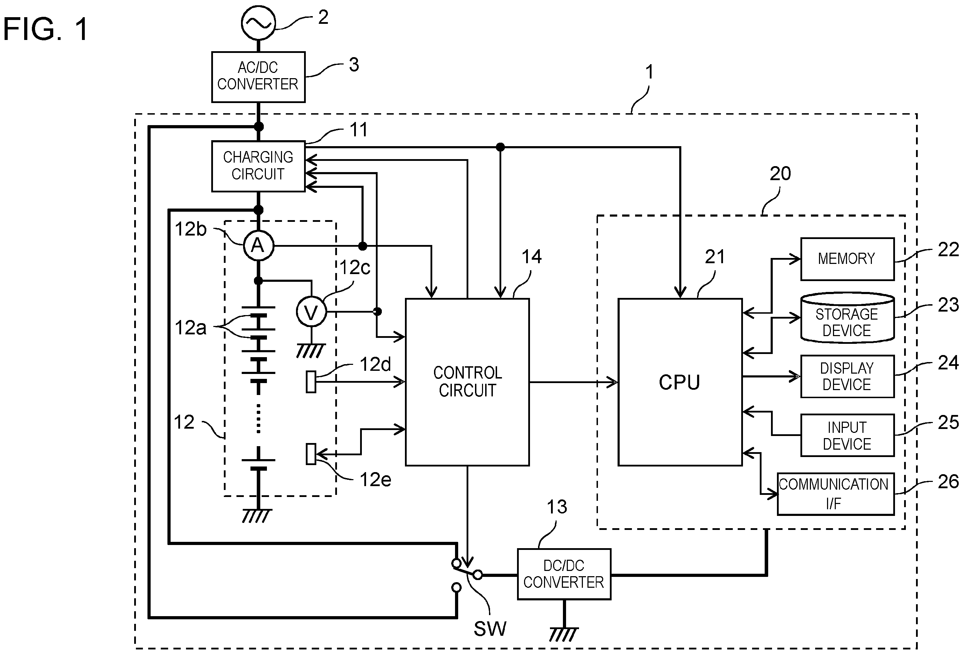

Fig. 1 is a block diagram illustrating a configuration of electronic device 1 according to an exemplary embodiment. Electronic device 1 includes battery pack 12, and is operable with a power supplied by battery pack 12. Electronic device 1 may be, for example, a portable personal computer (For example, a notebook computer or a tablet computer), a mobile phone, or the like. Electronic device 1 is connected to AC power supply 2 with AC/DC converter 3 interposed therebetween. AC/DC converter 3 converts an AC power supplied from an AC power supply 2 into DC power and supplies the DC power to electronic device 1, and electronic device 1 operates with the power supplied from AC/DC converter 3 and charges internal battery pack 12.

Electronic device 1 includes charging circuit 11, battery pack 12, DC/DC converter 13, control circuit 14, switch SW, and load device 20.

In Fig. 1, a thick line indicates a power line, and a thin line indicates a signal line.

Charging circuit 11 charges battery pack 12 with the power supplied from AC/DC converter 3. Charging circuit 11 supplies a power to battery pack 12 at a voltage variable and a current variable in accordance with a charging rate of battery pack 12, for example, in any of a constant current mode, a constant voltage mode, and a constant power mode.

Battery pack 12 includes a plurality of battery cells 12a, current sensor 12b, voltage sensor 12c, temperature sensor 12d, and nonvolatile memory 12e. Each battery cell 12a is a chargeable and dischargeable rechargeable battery. The plurality of battery cells 12a are connected to each other in series and/or in parallel, and have predetermined internal resistance Rd as a whole. Internal resistance Rd of battery pack 12 is calculated by control circuit 14 as will be described later. Current sensor 12b detects a current (hereinafter, also referred to as "charge current Ib" of battery pack 12) supplied from charging circuit 11 to battery pack 12 and notifies charging circuit 11 and control circuit 14 of the detected current. In addition, current sensor 12b detects a current (hereinafter, also referred to as "discharge current Id" of battery pack 12) supplied from battery pack 12 to load device 20 with DC/DC converter 13 interposed therebetween, and notifies control circuit 14 of the detected current. Voltage sensor 12c detects a voltage across a positive electrode and a negative electrode of battery pack 12 and notifies charging circuit 11 and control circuit 14 of the detected voltage. Hereinafter, the voltages of battery pack 12 during charging and discharging are also referred to as "charge voltage Vb" and a "discharge voltage Vd" of battery pack 12, respectively. Temperature sensor 12d detects a temperature of each battery cell 12a and notifies control circuit 14 of the detected temperature. Nonvolatile memory 12e stores internal resistance Rd of battery pack 12 calculated by control circuit 14.

Battery pack 12 may be configured to be detachably attached to electronic device 1, or may be built in electronic device 1.

Battery pack 12 is an example of a storage battery.

Switch SW selectively supplies one of the power supplied from AC/DC converter 3 and the power discharged from battery pack 12 to DC/DC converter 13 under the control of control circuit 14.

DC/DC converter 13 generates one DC voltage or a plurality of DC voltages different from each other with the power supplied from AC/DC converter 3 or the power discharged from battery pack 12, and supplies the generated DC voltage to load device 20.

Control circuit 14 controls operations of charging circuit 11, switch SW, and central processing unit (CPU) 21 of load device 20. Control circuit 14 may be, for example, a microcontroller of a type called an embedded controller (EC) for a computer.

Load device 20 includes central processing unit (CPU) 21, memory 22, storage device 23, display device 24, input device 25, and communication interface (I/F) 26. CPU 21 executes a program stored in storage device 23 and controls operations of the other components 22 to 26 of load device 20. Memory 22 temporarily stores programs and data necessary for the operation of electronic device 1. Storage device 23 stores programs and data necessary for the operation of electronic device 1. Storage device 23 may include, for example, a solid state drive or a hard disk drive. Display device 24 displays a result of the program executed by CPU 21. Input device 25 receives a user input for controlling the operation of electronic device 1. Input device 25 includes a keyboard, a pointing device, and the like. Communication interface 26 is connected to an external device to be able to communicate via a wired line and/or a wireless line. Communication interface 26 may include an interface for connecting to a peripheral device such as a universal serial bus (USB).

CPU 21 has a plurality of performance states that each operate with different powers. These performance states may be, for example, Px performance states (x = 0, 1, ..., and n) as defined by the Advanced Configuration and Power Interface (ACPI) specification. Here, "n" is a predetermined maximum value depending on CPU 21. In the P0 performance state, CPU 21 operates at a maximum performance and consumes a maximum power. In the P1 performance state, CPU 21 operates at a lower performance than in the P0 performance state and operates with a lower power than in the P0 performance state. Thereafter, as the number of "Px" increases, performance and power consumption of CPU 21 decrease, and in the Pn performance state, CPU 21 operates at a lowest performance and consumes a lowest power while maintaining an active state.

CPU 21 is an example of an arithmetic circuit.

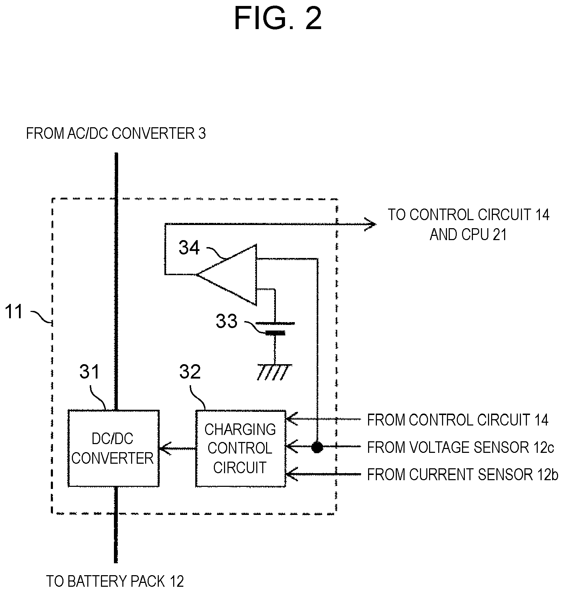

Fig. 2 is a block diagram illustrating a configuration of charging circuit 11 of Fig. 1. Charging circuit 11 includes DC/DC converter 31, charging control circuit 32, reference voltage source 33, and comparator 34. DC/DC converter 31 is, for example, a step-up/step-down power converter including a plurality of switching elements, an inductor, a pulse width modulation circuit, and the like. Charging control circuit 32 controls an operation of DC/DC converter 31 based on charge voltage Vb detected by voltage sensor 12c and charge current Ib detected by current sensor 12b. Specifically, charging control circuit 32 calculates a charging rate of battery pack 12 based on charge voltage Vb and charge current Ib, and controls a switching frequency and a duty ratio of each switching element of DC/DC converter 31 to generate a desired voltage and a desired current in accordance with the charging rate. In addition, charging control circuit 32 temporarily stops and restarts the charging of battery pack 12 in response to a control signal from control circuit 14. Reference voltage source 33 generates a reference voltage representing predetermined threshold voltage Vmin. Threshold voltage Vmin indicates a low voltage at which there is a concern that the instantaneous interruption of electronic device 1 occurs. When discharge voltage Vd detected by voltage sensor 12c becomes smaller than threshold voltage Vmin, comparator 34 generates the interrupt signal and sends the interrupt signal to control circuit 14 and CPU 21.

Referring back to Fig. 1, control circuit 14 calculates internal resistance Rd of battery pack 12 based on charge voltage Vb and charge current Ib of battery pack 12. Control circuit 14 calculates allowable power W indicating the maximum power that can be acquired from battery pack 12 by CPU 21 based on discharge voltage Vd, discharge current Id, and internal resistance Rd of battery pack 12. Control circuit 14 transmits the control signal to CPU 21 such that CPU 21 operates with the power less than or equal to allowable power W.

In addition, when discharge voltage Vd of battery pack 12 decreases and there is a concern that the instantaneous interruption of electronic device 1 occurs, control circuit 14 corrects internal resistance Rd and recalculates allowable power W.

CPU 21 selectively operates in one of the plurality of performance states in response to the control signal from control circuit 14 such that CPU 21 operates with the power less than or equal to the allowable power.

Control circuit 14 may set some threshold powers to CPU 21 for the purpose of thermal management of CPU 21. For example, a threshold power of Power Limit 4 (PL4) used by an intel (registered trademark) core processor of Intel Corporation may be set, and may limit an operation frequency of CPU 21 to prevent power spikes above PL4.

[Operation of exemplary embodiment]

Control circuit 14 controls the operation of electronic device 1 by executing charging control processing, discharging control processing, and interruption processing to be described below.

[Charging control processing]

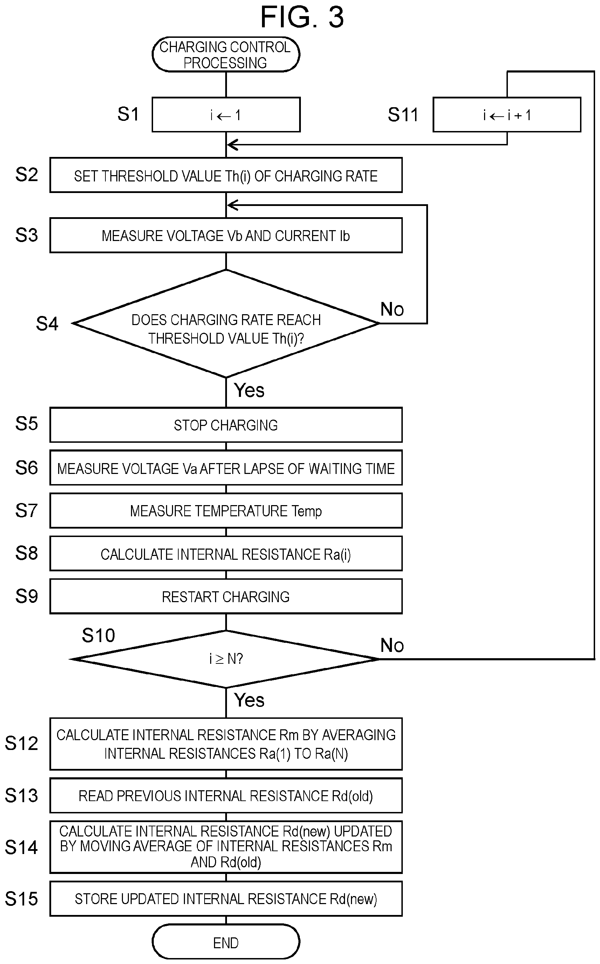

Fig. 3 is a flowchart illustrating the charging control processing executed by control circuit 14 of Fig. 1. Battery pack 12 deteriorates by continuing to be used. Internal resistance Rd increases, and as a result, a power and a power amount that can be supplied decrease. In the charging control processing, control circuit 14 measures internal resistance Rd of battery pack 12 while charging battery pack 12.

In step S1, control circuit 14 sets parameter i to 1. In the present exemplary embodiment, in order to measure the internal resistance of battery pack 12, control circuit 14 measures the internal resistance a plurality of N times during charging of battery pack 12, and calculates an average of the plurality of internal resistances. Parameter i is a parameter representing the number of times of measurements of the internal resistance.

In step S2, control circuit 14 sets threshold value Th(i) of the charging rate of battery pack 12. In the present exemplary embodiment, control circuit 14 measures internal resistances Ra(i) of battery pack 12 whenever the charging rate of battery pack 12 reaches any of a plurality of predetermined threshold values Th(i).

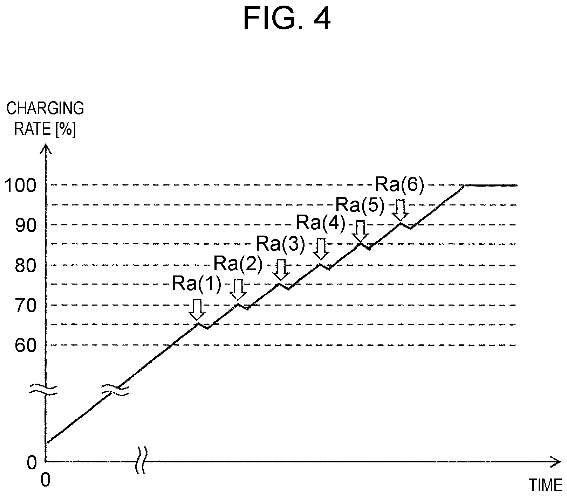

Fig. 4 is a graph for describing calculation of internal resistances Ra(1) to Ra(6) by repeatedly executing steps S1 to S11 of Fig. 3. In the example of Fig. 4, six threshold values Th(1) = 65%, Th(2) = 70%, Th(3) = 75%, Th(4) = 80%, Th(5) = 85%, and Th(6) = 90% are used for the charging rate of battery pack 12. That is, the plurality of threshold values Th(i) are values corresponding to the number of times of repetitions of steps S1 to S11 (parameter i: the number of times of measurements of the internal resistance). Here, as parameter i increases, the plurality of threshold values Th(i) increase. In the example of Fig. 4, whenever the charging rate of battery pack 12 reaches threshold values Th(1) to Th(6), control circuit 14 measures internal resistances Ra(1) to Ra(6) of corresponding battery pack 12.

Referring back to Fig. 3, in step S3, control circuit 14 measures charge voltage Vb of battery pack 12 by using voltage sensor 12c, and measures charge current Ib of battery pack 12 by using current sensor 12b. Control circuit 14 may periodically measure charge voltage Vb and charge current Ib at a frequency of, for example, several tens of milliseconds to several hundreds of milliseconds. In step S3, control circuit 14 further calculates the charging rate of battery pack 12 based on charge voltage Vb of battery pack 12. Basically, since there is a certain relationship between the voltage and the charging rate of the storage battery, the charging rate can be estimated from the voltage.

In step S4, control circuit 14 determines whether or not the charging rate of battery pack 12 reaches threshold value Th(i), proceeds to step S5 in the case of YES, and returns to step S3 in the case of NO.

[0037]    In step S5, control circuit 14 controls charging circuit 11 to temporarily stop the charging of battery pack 12.

In step S6, control circuit 14 detects voltage Va of battery pack 12 by using voltage sensor 12c after a lapse of a predetermined waiting time of 1 second or less after stopping the charging of battery pack 12.

In step S7, control circuit 14 measures temperature Temp of each battery cell 12a by using temperature sensor 12d.

In step S8, control circuit 14 calculates internal resistances Ra(i) of battery pack 12 based on voltages Va and Vb, current Ib, and temperature Temp of battery pack 12.

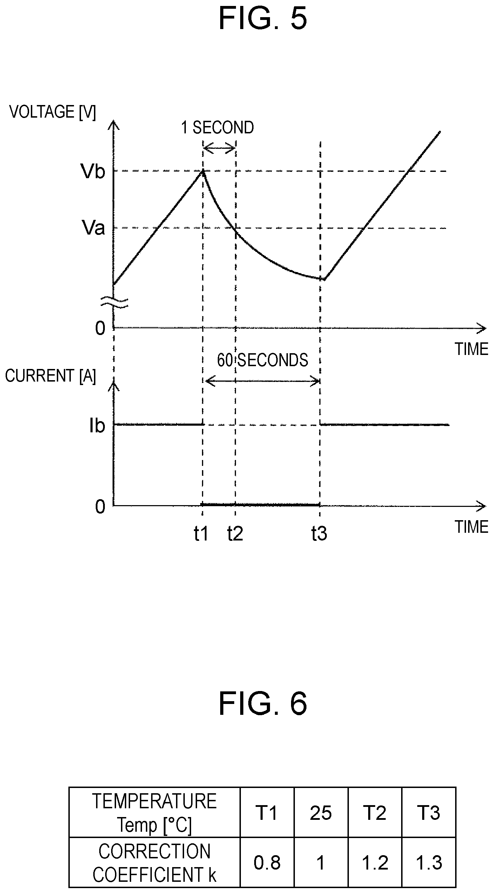

Fig. 5 is a graph for describing calculation of internal resistances Ra(i) by executing steps S3 to S8 of Fig. 3. An upper part of Fig. 5 illustrates the voltage of battery pack 12 detected by voltage sensor 12c, and a lower part of Fig. 5 illustrates the current of battery pack 12 detected by current sensor 12b. In the example of Fig. 5, when the voltage of battery pack 12 reaches voltage Vb, the charging rate of battery pack 12 reaches threshold value Th(i). Thus, at time t1, the charging of battery pack 12 is temporarily stopped, and the current of battery pack 12 becomes 0. Control circuit 14 acquires voltage Vb and current Ib immediately before stopping the charging of battery pack 12. Thereafter, control circuit 14 acquires voltage Va of battery pack 12 at time t2 after a lapse of a waiting time of 1 second after stopping the charging of battery pack 12. Control circuit 14 calculates internal resistances Ra(i) by dividing a potential difference between voltages Vb and Va by current Ib as in the following equation. In one example, "immediately before" stopping the charging of battery pack 12 means a time within 1 second from time t1.

$$Ra(i) = (Vb - Va)/Ib$$

The internal resistance of battery pack 12 is represented by complex impedance $Z = R + jX$, and can be decomposed into resistance component R and reactance component X. When the contribution of reactance component X in the calculation of the internal resistance is large, the calculated value of the internal resistance becomes excessive, and the power that can be supplied by battery pack 12 is estimated to be small. Accordingly, it is required to reduce the contribution of reactance component X in the calculation of the internal resistance and to calculate the internal resistance exclusively based on resistance component R. The inventor of the present invention experimentally confirmed that the contribution of reactance component X can be reduced and resistance component R can be extracted exclusively by calculating internal resistances Ra(i) based on the potential difference between voltage Vb immediately before stopping the charging of battery pack 12 and voltage Va after the lapse of the waiting time of 1 second or less after stopping the charging of battery pack 12.

Fig. 6 is a table representing a correction coefficient related to temperature Temp of battery cell 12a used in step S8 of Fig. 3. When temperature Temp of each battery cell 12a varies, the power that can be supplied by battery pack 12 also varies. Accordingly, control circuit 14 corrects internal resistances Ra(i) based on temperature Temp of battery cell 12a. Specifically, control circuit 14 multiplies internal resistances Ra(i) by correction coefficient k in accordance with temperature Temp of each battery cell 12a when internal resistances Ra(i) are measured. In the example of Fig. 6, temperature Temp gradually increases in the order of T1 < 25 degrees < T2 < T3. Correction coefficient k is set to convert the internal resistance measured at each of temperatures T1, T2, and T3 into the internal resistance measured at room temperature of 25°C.

Referring back to Fig. 3, in step S9, after detecting voltage Va, control circuit 14 controls charging circuit 11 to restart charging of battery pack 12 (see time t3 in Fig. 5). Control circuit 14 may restart charging of battery pack 12, for example, 60 seconds after stopping charging of battery pack 12.

In step S10, control circuit 14 determines whether or not parameter i reaches predetermined maximum value N (in the example of Fig. 4, N = 6). The control circuit proceeds to step S12 in the case of YES, and proceeds to step S11 in the case of NO. In other words, in step S10, control circuit 14 determines whether or not all internal resistances Ra(i) corresponding to all predetermined threshold values Th(i) are calculated.

In step S11, control circuit 14 increments parameter i by 1, and returns to step S2. Control circuit 14 acquires a plurality of internal resistances Ra(1) to Ra(N) by repeating temporary stopping of charging of battery pack 12 (step S5), calculation of internal resistances Ra(i) (step S8), and restarting of charging of battery pack 12 (step S9).

In step S12, control circuit 14 calculates internal resistance Rm by averaging internal resistances Ra(1) to Ra(N). For example, as illustrated in Fig. 4, in a case where internal resistances Ra(i) are measured six times during the charging of battery pack 12, average internal resistance Rm is calculated by the following equation.

$$Rm = [Ra(1) + Ra(2) + ... + Ra(6)]/6$$

Before calculating average internal resistance Rm, control circuit 14 may determine whether or not acquired internal resistances Ra(1) to Ra(N) are outliers. In this case, control circuit 14 calculates internal resistance Rm by excluding internal resistances Ra(i) that are the outliers and averaging remaining internal resistances Ra(j) ($1 \leq j \leq N$, $i \neq j$).

In addition, control circuit 14 may set in advance lower limit value Rmin and upper limit value Rmax of an internal resistance to be allowable, and round a value of internal resistance Rm in a case where calculated internal resistance Rm is smaller than lower limit value Rmin or larger than upper limit value Rmax. For example, in a case where Rm > Rmax, the measurement result may be processed as Rm = Rmax.

In step S13, control circuit 14 reads previously calculated internal resistance Rd as internal resistance Rd(old) from nonvolatile memory 12e.

In step S14, control circuit 14 calculates updated internal resistance Rd(new) from a moving average of previously calculated internal resistance Rd(old) and newly calculated internal resistance Rm. For example, in a case where a weighting of 3/4 is given to previously calculated internal resistance Rd(old), updated internal resistance Rd(new) is calculated by the following equation.

$$Rd(new) = Rd(old) \times 3/4 + Rm \times 1/4$$

As described above, control circuit 14 calculates a weighted moving average as updated internal resistance Rd(new) by using previously calculated internal resistance Rd(old), a weight (3/4) of internal resistance Rd(old), newly calculated internal resistance Rm, and a weight (1/4) of internal resistance Rm. In step S15, control circuit 14 stores updated internal resistance Rd(new) as internal resistance Rd in nonvolatile memory 12e, and ends the processing.

According to the charging control processing of Fig. 3, internal resistance Rd of battery pack 12 can be measured while charging battery pack 12.

According to the charging control processing of Fig. 3, it is possible to reduce the contribution of reactance component X and exclusively extract resistance component R by calculating internal resistance Ra(i) based on the potential difference between voltage Vb immediately before stopping the charging of battery pack 12 and voltage Va after the lapse of the waiting time of 1 second or less after stopping the charging of battery pack 12. Accordingly, according to the charging control processing of Fig. 3, internal resistance Rd of battery pack 12 can be measured with high accuracy.

In the charging control processing of Fig. 3, a waiting time from the stopping of charging of battery pack 12 to the measurement of voltage Va is set such that resistance component R of internal resistance Rd includes a radio-frequency component caused by an electrolytic solution transfer resistance, a lead resistance, a charge transfer resistance, and the like. A lower limit of the waiting time is set to be longer than or equal to a duration of a load generated during control. Although an upper limit of the waiting time is arbitrary, when the waiting time is increased, as described above, the contribution of reactance component X in the calculation of the internal resistance increases, the calculated value of the internal resistance becomes excessive, and the power that can be supplied by battery pack 12 is estimated to be small.

When electronic device 1 is connected to AC power supply 2 with AC/DC converter 3 interposed therebetween, control circuit 14 may execute the charging control processing of Fig. 3 even when electronic device 1 is powered off. Accordingly, even when electronic device 1 is powered off, battery pack 12 can be charged, and internal resistance Rd of battery pack 12 can be measured.

[Discharging control processing]

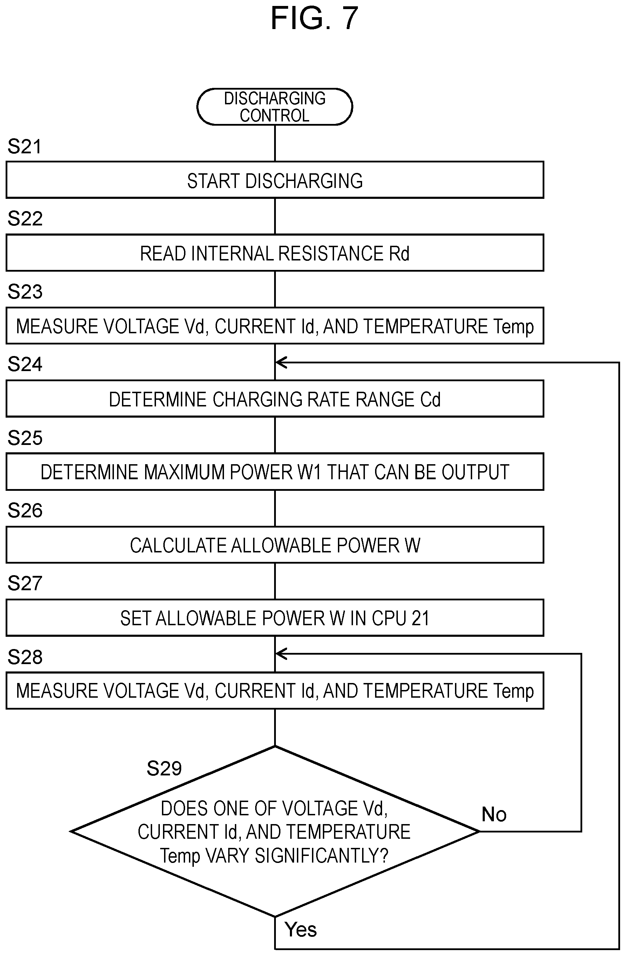

Fig. 7 is a flowchart illustrating the discharging control processing executed by control circuit 14 of Fig. 1. The discharging control processing is executed to supply a power from battery pack 12 to load device 20 when power supply from the external AC power supply 2 and AC/DC converter 3 to electronic device 1 is stopped.

In step S21, when power supply from external AC power supply 2 and AC/DC converter 3 to electronic device 1 is stopped, control circuit 14 controls switch SW to start discharging from battery pack 12. Alternatively, control circuit 14 may start discharging from battery pack 12 when electronic device 1 is powered on in a state where electronic device 1 is not connected to AC power supply 2 and AC/DC converter 3.

In step S22, control circuit 14 reads internal resistance Rd from nonvolatile memory 12e.

In step S23, control circuit 14 measures discharge voltage Vd of battery pack 12 by using voltage sensor 12c, measures discharge current Id of battery pack 12 by using current sensor 12b, and measures temperature Temp of battery pack 12 by using temperature sensor 12d.

In step S24, control circuit 14 determines which one of a plurality of charging rate ranges Cd the charging rate falls within based on discharge voltage Vd and discharge current Id of battery pack 12.

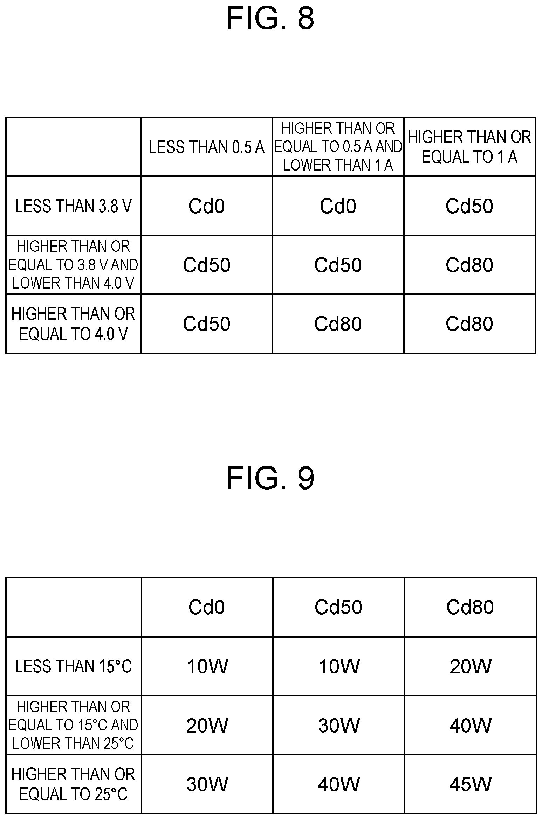

Fig. 8 is a table used to calculate charging rate range Cd in step S24 of Fig. 7. In the example of Fig. 8, Cd0 represents a charging rate of 0 to 49%, Cd50 represents a charging rate of 50 to 79%, and Cd80 represents a charging rate of 80 to 100%. Control circuit 14 determines which one of charging rate ranges Cd0, Cd50, and Cd80 the charging rate falls within based on discharge voltage Vd and discharge current Id.

As described above, basically, there is a certain relationship between the voltage and the charging rate of the storage battery, and the charging rate can be estimated from the voltage when there is no load. However, in a case where there is a load, that is, in a case where the discharge current (or the charge current) is flowing, since the voltage is displaced in accordance with the magnitude of the flowing current, the magnitude of the current is also referred to in order to determine charging rate range Cd.

Referring back to Fig. 7, in step S25, control circuit 14 determines maximum power W1 that can be output from battery pack 12 based on charging rate range Cd and temperature Temp of battery pack 12. Maximum power W1 indicates a maximum power that can be output from battery pack 12 in a case where internal resistance Rd of battery pack 12 is equal to maximum value Rmax.

Fig. 9 is a table used to determine maximum power W1 that can be output from battery pack 12 in step S25 of Fig. 7. Control circuit 14 determines which one of 10 W, 20 W, 30 W, 40 W, and 45 W maximum power W1 is, based on charging rate range Cd and temperature Temp.

Referring back to Fig. 7, in step S26, control circuit 14 calculates allowable power W indicating a maximum power that can be acquired from battery pack 12 by CPU 21 by using the following equation based on maximum power W1 that can be output from battery pack 12 and internal resistance Rd of battery pack 12.

$$W = (W1 - W2) \times ((Rmax + Re)/(Rd + Re)) + W2$$

Here, W2 indicates a minimum power that needs to be output from battery pack 12, including power consumed by components other than CPU 21 of electronic device 1. In addition, Re indicates a circuit resistance of electronic device 1 other than internal resistance Rd of battery pack 12.

As described above, maximum power W1 that can be output from battery pack 12 is determined based on charging rate range Cd of battery pack 12, and charging rate range Cd is determined based on discharge voltage Vd and discharge current Id of battery pack 12. Accordingly, equivalently, allowable power W is determined based on discharge voltage Vd, discharge current Id, and internal resistance Cd of battery pack 12. In addition, since maximum power W1 that can be output from battery pack 12 is determined based on temperature Temp of battery pack 12, allowable power W is equivalently corrected by temperature Temp.

In step S27, control circuit 14 sets allowable power Win CPU 21. Accordingly, CPU 21 is set to one of the plurality of performance states to acquire only the power less than or equal to allowable power W from battery pack 12.

In step S28, control circuit 14 measures discharge voltage Vd of battery pack 12 by using voltage sensor 12c, measures discharge current Id of battery pack 12 by using current sensor 12b, and measures temperature Temp of battery pack 12 by using temperature sensor 12d.

In step S29, control circuit 14 determines whether or not any one of discharge voltage Vd, discharge current Id, and temperature Temp measured in step S28 significantly varies from the corresponding value measured previously. The control circuit returns to step S24 in the case of YES, and returns to step S28 in the case of NO. Here, "significantly varies" means that discharge voltage Vd or discharge current Id changes as charging rate range Cd needs to be changed in the table of Fig. 8, or that charging rate range Cd or temperature Temp changes as maximum power W1 needs to be changed in the table of Fig. 9.

According to the discharging control processing of Fig. 7, the allowable power of CPU 21 can be set based on internal resistance Rd of battery pack 12 measured by performing the charging control processing of Fig. 3. Accordingly, the power consumption of CPU 21 can be controlled with higher accuracy than in the related art based on accurate internal resistance Rd.

[Interruption processing]

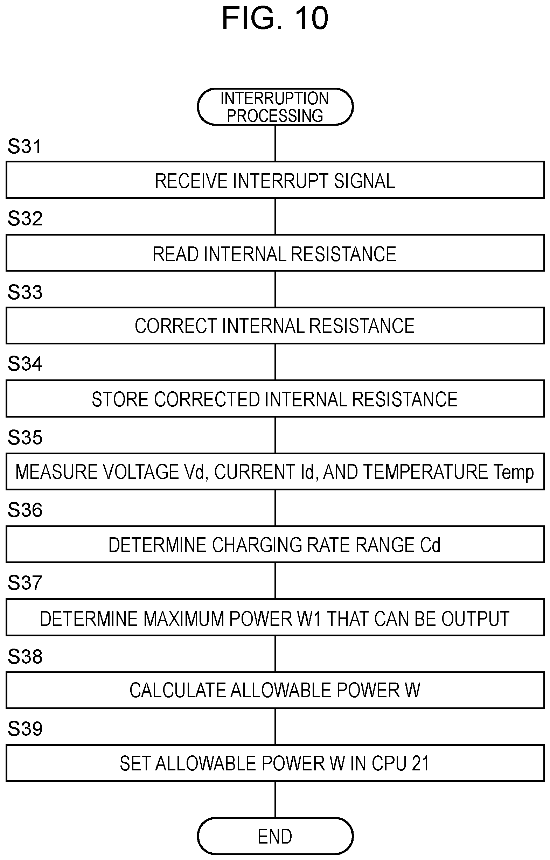

Fig. 10 is a flowchart illustrating the interruption processing executed by control circuit 14 of Fig. 1. In a case where electronic device 1 is operating with the power discharged from battery pack 12 (that is, during execution of the discharging control processing in Fig. 7), the interruption processing is executed when there is a concern that the instantaneous interruption of electronic device 1 occurs due to a decrease in the discharge voltage of battery pack 12.

As described above, when discharge voltage Vd detected by voltage sensor 12c becomes smaller than threshold voltage Vmin, charging circuit 11 generates an interrupt signal and sends the interrupt signal to control circuit 14 and CPU 21.

The interrupt signal may be, for example, a prochot signal used by the intel core processor of Intel Corporation. The prochot signal is asserted when the processor is at a high temperature, and the processor is caused to transition to the Pn performance state. By using the prochot signal, CPU 21 operates with a minimum performance and transitions to a state that consumes the minimum power while maintaining the active state. Accordingly, the instantaneous interruption of electronic device 1 is avoided.

In step S31, control circuit 14 receives an interrupt signal from charging circuit 11.

In step S32, control circuit 14 reads internal resistance Rd from nonvolatile memory 12e.

In step S33, control circuit 14 corrects internal resistance Rd to increase internal resistance Rd by a predetermined correction coefficient larger than 1, for example, 1.05.

In step S34, control circuit 14 stores corrected internal resistance Rd in nonvolatile memory 12e.

In step S35, control circuit 14 measures discharge voltage Vd of battery pack 12 by using voltage sensor 12c, measures discharge current Id of battery pack 12 by using current sensor 12b, and measures temperature Temp of battery pack 12 by using temperature sensor 12d.

In step S36, control circuit 14 determines which one of the plurality of charging rate ranges Cd the charging rate falls within based on discharge voltage Vd and discharge current Id of battery pack 12 as in step S24 of Fig. 7.

In step S37, control circuit 14 determines maximum power W1 that can be output from battery pack 12 based on charging rate range Cd and temperature Temp of battery pack 12 as in step S25 in Fig. 7.

In step S38, control circuit 14 calculates allowable power W indicating the maximum power that can be acquired from battery pack 12 by CPU 21 based on maximum power W1 that can be output from battery pack 12 and internal resistance Rd of battery pack 12 as in step S26 of Fig. 7.

In step S39, control circuit 14 sets allowable power W in CPU 21. Accordingly, CPU 21 ends the Pn performance state started in accordance with the prochot signal, and sets one of the plurality of performance states to obtain only the power less than or equal to allowable power W from battery pack 12.

After the execution of step S39, control circuit 14 returns to the discharging control processing of Fig. 7.

In a case where internal resistance Rd is calculated to be smaller than an actual internal resistance, a value larger than actual allowable power W is set in CPU 21. According to the interruption processing of Fig. 10, when the discharge voltage of battery pack 12 decreases and there is a concern that the instantaneous interruption of electronic device 1 occurs, internal resistance Rd is corrected and allowable power W is recalculated. Accordingly, the power consumption of CPU 21 can be controlled with high accuracy while avoiding the instantaneous interruption of electronic device 1.

[Effects of exemplary embodiment]

Electronic device 1 according to one aspect of the present disclosure includes battery pack 12, charging circuit 11 that charges battery pack 12, load device 20 that operates with the power of battery pack 12, voltage sensor 12c that detects the charge voltage and the discharge voltage of battery pack 12, current sensor 12b that detects the charge current and the discharge current of battery pack 12, and control circuit 14. Control circuit 14 calculates the internal resistance of battery pack 12 based on the charge voltage and the charge current, calculates the allowable power indicating the maximum power that can be acquired from battery pack 12 by load device 20 based on the discharge voltage, the discharge current, and the internal resistance, and sends the control signal to load device 20 such that load device 20 operates with the power less than or equal to the allowable power.

As described above, the power consumption can be controlled with higher accuracy than in the related art by setting the allowable power of load device 20 based on measured internal resistance Rd of battery pack 12.

In electronic device 1 according to one aspect of the present disclosure, control circuit 14 may control charging circuit 11 to temporarily stop the charging of battery pack 12 during the charging of battery pack 12. In this case, control circuit 14 detects the charge voltage (first voltage) of battery pack 12 immediately before stopping the charging of battery pack 12. In addition, control circuit 14 detects a second voltage of battery pack 12 after a lapse of a predetermined waiting time of 1 second or less after stopping the charging of battery pack 12. In addition, control circuit 14 detects a first current that is the charge current immediately before stopping the charging of battery pack 12. In addition, control circuit 14 calculates the internal resistance by dividing a potential difference between the first and second voltages by the first current. In addition, control circuit 14 controls charging circuit 11 to restart the charging of battery pack 12 after the detection of the second voltage.

As described above, internal resistance Rd of battery pack 12 can be measured with high accuracy by calculating internal resistance Ra(i) based on the potential difference between voltage Vb immediately before stopping the charging of battery pack 12 and voltage Va after the lapse of the waiting time of 1 second or less after stopping the charging of battery pack 12.

In electronic device 1 according to one aspect of the present disclosure, control circuit 14 may acquire the plurality of internal resistances by repeating the temporary stopping of charging of battery pack 12, the calculation of the internal resistance, and the restarting of the charging of battery pack 12. In this case, control circuit 14 calculates the allowable power based on the discharge voltage, the discharge current, and the average of the plurality of internal resistances.

As described above, internal resistance Rd of battery pack 12 can be measured with high accuracy by calculating the average of the plurality of internal resistances.

In electronic device 1 according to one aspect of the present disclosure, control circuit 14 may calculate the moving average of the previously calculated internal resistance and the newly calculated internal resistance. In this case, control circuit 14 calculates the allowable power based on the discharge voltage, the discharge current, and the moving average of the internal resistances.

As described above, internal resistance Rd of battery pack 12 can be measured with high accuracy by calculating the moving average of the internal resistances.

In electronic device 1 according to one aspect of the present disclosure, electronic device 1 may further include temperature sensor 12d that detects the temperature of battery pack 12. In this case, control circuit 14 corrects the internal resistance and the allowable power based on the temperature of battery pack 12.

As described above, the power consumption can be controlled with high accuracy by correcting the internal resistance and the allowable power based on the temperature of battery pack 12.

In electronic device 1 according to one aspect of the present disclosure, control circuit 14 may correct the internal resistance to increase the internal resistance with a predetermined correction coefficient larger than 1 in a case where the discharge voltage becomes smaller than a predetermined threshold value. In this case, control circuit 14 calculates the allowable power based on the discharge voltage, the discharge current, and the corrected internal resistance.

As described above, the power consumption of load device 20 can be controlled with high accuracy while avoiding the instantaneous interruption of electronic device 1 by correcting internal resistance Rd and recalculating allowable power W.

In electronic device 1 according to one aspect of the present disclosure, load device 20 may include the arithmetic circuit.

Accordingly, the power consumption of the arithmetic circuit such as CPU 21 can be controlled with higher accuracy than in the related art.

In electronic device 1 according to one aspect of the present disclosure, the arithmetic circuit may have the plurality of performance states that operate with different powers. In this case, control circuit 14 selectively operates in one of the plurality of performance states in response to the control signal such that the arithmetic circuit operates with the power less than or equal to the allowable power.

Accordingly, the power consumption of the arithmetic circuit such as CPU 21 can be controlled with higher accuracy than in the related art.

A method for controlling electronic device 1 according to one aspect of the present disclosure controls the electronic device including battery pack 12 and the load device that operates with the power of battery pack 12. The method includes calculating the internal resistance of battery pack 12 based on the charge voltage and the charge current of battery pack 12. The method includes calculating the allowable power indicating the maximum power that can be acquired from battery pack 12 by the load device based on the discharge voltage and the discharge current of battery pack 12 and the internal resistance. The method includes controlling the load device such that the load device operates with the power less than or equal to the allowable power.

As described above, the power consumption can be controlled with higher accuracy than in the related art by setting the allowable power of load device 20 based on measured internal resistance Rd of battery pack 12.

[Other exemplary embodiments]

The exemplary embodiment has been described as exemplification of the technique disclosed in the present application. However, the technique in the present disclosure is not limited to the exemplary embodiment and is applicable to exemplary embodiments appropriately subjected to changes, replacements, additions, omissions, and the like. In addition, it is also possible to combine the components described in the above-described embodiment to form a new embodiment.

Thus, hereinafter, other exemplary embodiments are illustrated as examples.

Control circuit 14 is not limited to CPU 21, and may control any arithmetic circuit having a plurality of performance states that operate with different powers. The arithmetic circuit may include a graphics processing unit (GPU), an application specific integrated circuit (ASIC), a field programmable gate array (FPGA), and the like.

In the example of Fig. 1, when discharge voltage Vd becomes smaller than threshold voltage Vmin, charging circuit 11 generates the interrupt signal and sends the interrupt signal to control circuit 14 and CPU 21. Alternatively, control circuit 14 may include the reference voltage source that generates the reference voltage representing threshold voltage Vmin, and when discharge voltage Vd becomes smaller than threshold voltage Vmin, control circuit 14 may generate and send an interrupt signal to CPU 21.

Temperature Temp and correction coefficient k different from those illustrated in Fig. 6 may be used in accordance with the specification of each battery cell 12a. In addition, another charging rate range Cd different from that illustrated in Fig. 8 may be used in accordance with the specification of each battery cell 12a. In addition, another maximum power W1 having a range and the number different from those illustrated in Fig. 9 may be used in accordance with the specification of each battery cell 12a.

In the example of Fig. 6, although internal resistances Ra(i) of battery pack 12 are corrected by using the table of temperature Temp and correction coefficient k, control circuit 14 may correct internal resistances Ra(i) by using some calculation equations instead of the table. In addition, in the example of Fig. 8, although charging rate range Cd is determined by using the table of discharge voltage Vd and discharge current Id, control circuit 14 may calculate charging rate range Cd by using some calculation equations instead of the table. In addition, in the example of Fig. 9, although maximum power W1 is determined by using the table of the charging rate range Cd and temperature Temp, control circuit 14 may calculate maximum power W1 by using some calculation equations instead of the table.

Current sensor 12b and voltage sensor 12c may be provided outside battery pack 12.

In a case where battery pack 12 is not detachably attached but is incorporated in electronic device 1, the internal resistance of battery pack 12 may be stored in a nonvolatile memory inside control circuit 14.

As described above, the exemplary embodiments have been described as examples of the technique according to the present disclosure. To this end, the accompanying drawings and detailed description are provided.

Therefore, in order to illustrate the above techniques, the components illustrated in the accompanying drawings and described in the detailed description can include not only components essential for solving the problems but also components non-essential for solving the problems. Thus, it should not be immediately construed that those non-essential components are essential only based on the fact that those non-essential components are illustrated in the accompanying drawings or described in the detailed description.

In addition, since the above exemplary embodiments are for illustrating the techniques in the present disclosure, various modifications, replacements, additions, omissions, or the like can be made without departing from the scope of the accompanying claims or the equivalent thereof.

INDUSTRIAL APPLICABILITY

According to the electronic device according to one aspect of the present disclosure, power consumption can be controlled with higher accuracy than in the related art, and usability of the electronic device can be improved.

REFERENCE MARKS IN THE DRAWINGS

| | |
|---|---|
| 1 | electronic device |
| 2 | AC power supply |
| 3 | AC/DC converter |
| 11 | charging circuit |
| 12 | battery pack |
| 12a | battery cell |
| 12b | current sensor |
| 12c | voltage sensor |
| 12d | temperature sensor |
| 12e | nonvolatile memory |
| 13 | DC/DC converter |
| 14 | control circuit |

20 load device
21 central processing unit (CPU)
22 memory
23 storage device
24 display device
25 input device
26 communication interface (I/F)
31 DC/DC converter
32 charging control circuit
33 reference voltage source
34 comparator
SW switch

**Claims**

1. An electronic device comprising:

   a storage battery;
   a charging circuit that charges the storage battery;
   a load device that operates with a power of the storage battery;
   a voltage sensor that detects a charge voltage and a discharge voltage of the storage battery;
   a current sensor that detects a charge current and a discharge current of the storage battery; and
   a control circuit,
   wherein the control circuit:

   calculates an internal resistance of the storage battery based on the charge voltage and the charge current,
   calculates an allowable power indicating a maximum power that is able to be acquired from the storage battery by the load device based on the discharge voltage, the discharge current, and the internal resistance, and
   sends a control signal to the load device to cause the load device to operate with a power less than or equal to the allowable power.

2. The electronic device according to Claim 1, wherein the control circuit:

   controls the charging circuit to temporarily stop the charging of the storage battery during the charging of the storage battery,
   detects a first voltage that is the charge voltage immediately before stopping the charging of the storage battery,
   detects a second voltage of the storage battery after a lapse of a predetermined waiting time of 1 second or less after the charging of the storage battery is stopped,
   detects a first current that is the charge current immediately before stopping the charging of the storage battery,
   calculates the internal resistance by dividing a potential difference between the first and second voltages by the first current, and
   controls the charge circuit to restart the charging of the storage battery after the detection of the second voltage.

3. The electronic device according to Claim 2, wherein the control circuit:

   calculates a charging rate of the storage battery based on the charge voltage,
   determines whether or not the charging rate reaches a threshold value, and
   controls the charging circuit to temporarily stop the charging of the storage battery when the control circuit determines that the charging rate reaches the threshold value.

4. The electronic device according to Claim 2, wherein the control circuit:

   acquires a plurality of internal resistances by repeating the temporary stopping of the charging of the storage battery, the calculation of the internal resistance, and the restarting of the charging of the storage battery, and calculates the allowable power based on the discharge voltage, the discharge current, and an average of the plurality of internal resistances.

5.  The electronic device according to Claim 4, wherein
the control circuit:

calculates a charging rate of the storage battery based on the charge voltage,
determines whether or not the charging rate reaches a threshold value corresponding to a number of times of the repetition, and
controls the charging circuit to temporarily stop the charging of the storage battery when the control circuit determines that the charging rate reaches the threshold value corresponding to the number of times of the repetition.

6.  The electronic device according to any one of Claims 1 to 5, wherein
the control circuit:

calculates a moving average of a previously calculated internal resistance and the calculated internal resistance, and
calculates the allowable power based on the discharge voltage, the discharge current, and the moving average.

7.  The electronic device according to any one of Claims 1 to 5, wherein
the control circuit:

calculates a weighted moving average by using a previously calculated internal resistance, a weight of the previously calculated internal resistance, the calculated internal resistance, and a weight of the calculated internal resistance, and
calculates the allowable power based on the discharge voltage, the discharge current, and the weighted moving average.

8.  The electronic device according to any one of Claims 1 to 7, further comprising a temperature sensor that detects a temperature of the storage battery,
wherein the control circuit corrects the internal resistance and the allowable power based on the temperature of the storage battery.

9.  The electronic device according to any one of Claims 1 to 8, wherein
when the discharge voltage becomes smaller than a predetermined threshold value, the control circuit:

corrects the internal resistance to increase the internal resistance by a predetermined correction coefficient larger than 1, and
calculates the allowable power based on the discharge voltage, the discharge current, and the corrected internal resistance.

10.  The electronic device according to any one of Claims 1 to 9, wherein the load device includes an arithmetic circuit.

11.  The electronic device according to Claim 10, wherein
the arithmetic circuit:

has a plurality of performance states that operate with different powers, and
selectively operates in one of the plurality of performance states to cause the arithmetic circuit to operate with a power less than or equal to the allowable power in response to the control signal.

12.  A method for controlling an electronic device including a storage battery and a load device that operates with a power of the storage battery, the method comprising:

calculating an internal resistance of the storage battery based on a charge voltage and a charge current of the storage battery;
calculating an allowable power indicating a maximum power that is able to be acquired from the storage battery by the load device based on the discharge voltage, the discharge current, and the internal resistance; and controlling the load device to cause the load device to operate with a power less than or equal to the allowable power.

FIG. 1

EP 4 376 251 A1

# FIG. 2

FROM AC/DC CONVERTER 3

TO CONTROL CIRCUIT 14
AND CPU 21

11

34

33

31

32

DC/DC
CONVERTER

CHARGING
CONTROL
CIRCUIT

FROM CONTROL CIRCUIT 14

FROM VOLTAGE SENSOR 12c

FROM CURRENT SENSOR 12b

TO BATTERY PACK 12

# FIG. 3

CHARGING CONTROL PROCESSING

S1 | $i \leftarrow 1$

S11 | $i \leftarrow i + 1$

S2 | SET THRESHOLD VALUE Th(i) OF CHARGING RATE

S3 | MEASURE VOLTAGE Vb AND CURRENT Ib

S4 | DOES CHARGING RATE REACH THRESHOLD VALUE Th(i)? — No

Yes

S5 | STOP CHARGING

S6 | MEASURE VOLTAGE Va AFTER LAPSE OF WAITING TIME

S7 | MEASURE TEMPERATURE Temp

S8 | CALCULATE INTERNAL RESISTANCE Ra(i)

S9 | RESTART CHARGING

S10 | $i \geq N$? — No

Yes

S12 | CALCULATE INTERNAL RESISTANCE Rm BY AVERAGING INTERNAL RESISTANCES Ra(1) TO Ra(N)

S13 | READ PREVIOUS INTERNAL RESISTANCE Rd(old)

S14 | CALCULATE INTERNAL RESISTANCE Rd(new) UPDATED BY MOVING AVERAGE OF INTERNAL RESISTANCES Rm AND Rd(old)

S15 | STORE UPDATED INTERNAL RESISTANCE Rd(new)

END

# FIG. 4

# FIG. 5

# FIG. 6

| TEMPERATURE Temp [°C] | T1 | 25 | T2 | T3 |
|---|---|---|---|---|
| CORRECTION COEFFICIENT k | 0.8 | 1 | 1.2 | 1.3 |

# FIG. 7

DISCHARGING
CONTROL

S21
START DISCHARGING

S22
READ INTERNAL RESISTANCE Rd

S23
MEASURE VOLTAGE Vd, CURRENT Id, AND TEMPERATURE Temp

S24
DETERMINE CHARGING RATE RANGE Cd

S25
DETERMINE MAXIMUM POWER W1 THAT CAN BE OUTPUT

S26
CALCULATE ALLOWABLE POWER W

S27
SET ALLOWABLE POWER W IN CPU 21

S28
MEASURE VOLTAGE Vd, CURRENT Id, AND TEMPERATURE Temp

S29
DOES ONE OF VOLTAGE Vd, CURRENT Id, AND TEMPERATURE Temp VARY SIGNIFICANTLY?

No

Yes

# FIG. 8

|  | LESS THAN 0.5 A | HIGHER THAN OR EQUAL TO 0.5 A AND LOWER THAN 1 A | HIGHER THAN OR EQUAL TO 1 A |
|---|---|---|---|
| LESS THAN 3.8 V | Cd0 | Cd0 | Cd50 |
| HIGHER THAN OR EQUAL TO 3.8 V AND LOWER THAN 4.0 V | Cd50 | Cd50 | Cd80 |
| HIGHER THAN OR EQUAL TO 4.0 V | Cd50 | Cd80 | Cd80 |

# FIG. 9

|  | Cd0 | Cd50 | Cd80 |
|---|---|---|---|
| LESS THAN 15°C | 10W | 10W | 20W |
| HIGHER THAN OR EQUAL TO 15°C AND LOWER THAN 25°C | 20W | 30W | 40W |
| HIGHER THAN OR EQUAL TO 25°C | 30W | 40W | 45W |

# FIG. 10

INTERRUPTION
PROCESSING

S31
RECEIVE INTERRUPT SIGNAL

S32
READ INTERNAL RESISTANCE

S33
CORRECT INTERNAL RESISTANCE

S34
STORE CORRECTED INTERNAL RESISTANCE

S35
MEASURE VOLTAGE Vd, CURRENT Id, AND TEMPERATURE Temp

S36
DETERMINE CHARGING RATE RANGE Cd

S37
DETERMINE MAXIMUM POWER W1 THAT CAN BE OUTPUT

S38
CALCULATE ALLOWABLE POWER W

S39
SET ALLOWABLE POWER W IN CPU 21

END

## INTERNATIONAL SEARCH REPORT

International application No.

**PCT/JP2022/026752**

### A. CLASSIFICATION OF SUBJECT MATTER

*H02J 7/00*(2006.01)i; *G06F 1/28*(2006.01)i; *H02J 7/10*(2006.01)i
FI:   H02J7/00 302A; H02J7/10 B; H02J7/10 H; G06F1/28

According to International Patent Classification (IPC) or to both national classification and IPC

### B. FIELDS SEARCHED

Minimum documentation searched (classification system followed by classification symbols)

H02J7/00; G06F1/28; H02J7/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2010-130798 A (SANYO ELECTRIC CO LTD) 10 June 2010 (2010-06-10) paragraphs [0016]-[0019], [0027], [0029]-[0030], [0036]-[0038], [0042], fig. 2, 5, 9-11 | 1, 6-8, 10-12 |
| A | | 2-5, 9 |
| Y | JP 2005-165545 A (SONY CORPORATION) 23 June 2005 (2005-06-23) paragraphs [0033], [0066]-[0067], [0071]-[0073], fig. 1-2, 4, 9 | 1, 6-8, 10-12 |
| A | | 2-5, 9 |
| Y | JP 2011-257219 A (NISSAN MOTOR CO LTD) 22 December 2011 (2011-12-22) paragraphs [0051], [0107] | 6-8 |
| A | | 2-5, 9 |
| A | JP 2006-129588 A (SANYO ELECTRIC CO LTD) 18 May 2006 (2006-05-18) entire text, all drawings | 2-5, 9 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 August 2022** | **30 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/026752**

| Patent document cited in search report | | | Publication date (day/month/year) | Patent family member(s) | | | Publication date (day/month/year) |
|---|---|---|---|---|---|---|---|
| JP | 2010-130798 | A | 10 June 2010 | (Family: none) | | | |
| JP | 2005-165545 | A | 23 June 2005 | US | 2005/0136320 | A1 | |
| | | | | paragraphs [0035], [0069]-[0070], [0073]-[0075], fig. 1-2, 4, 9 | | | |
| | | | | EP | 1538511 | A2 | |
| | | | | CN | 1624625 | A | |
| JP | 2011-257219 | A | 22 December 2011 | US | 2013/0080096 | A1 | |
| | | | | paragraphs [0068], [0124] | | | |
| | | | | WO | 2011/155184 | A1 | |
| | | | | CN | 102933978 | A | |
| | | | | KR | 10-2013-0018310 | A | |
| JP | 2006-129588 | A | 18 May 2006 | US | 2006/0087291 | A1 | |
| | | | | entire text, all drawings | | | |
| | | | | DE | 102005051317 | A1 | |
| | | | | KR | 10-2006-0052273 | A | |
| | | | | CN | 1767309 | A | |

Form PCT/ISA/210 (patent family annex) (January 2015)

23

**EP 4 376 251 A1**

**Patent documents cited in the description**

- JP 2006195945 A